# EUROPEAN PATENT APPLICATION

(11) **EP 4 060 608 A1**
(43) Date of publication of application: **21.09.2022**
(21) Application number: 21163107.2
(22) Date of filing: 17.03.2021
(51) Int. Cl.: G06T 7/00, G06T 7/11, G06T 7/136, G06T 7/174, G06T 7/187, G06T 7/194, G06T 7/55, G06T 7/62

(54) **IMPROVED VISION-BASED MEASURING**

(71) Applicant: Robovision, 9052 Zwijnaarde (BE)
(72) Inventor: VERSTRAETE, Matthias, 9052 Zwijnaarde (BE); VAN PARYS, Ruben, 9052 Zwijnaarde (BE); RUSNAK, Stanislav, 9052 Zwijnaarde (BE); WAEGEMAN, Tim, 9052 Zwijnaarde (BE)
(74) Representative: Rogiest, Wouter

(57) **Abstract**

A method for generating a technical instruction for handling a 3D physical object present within a reference volume and comprising a 3D surface, the method comprising: obtaining at least two images of the object from a plurality of cameras positioned at different respective angles with respect to the object; generating, with respect to the 3D surface, a voxel representation segmented based on the at least two images, said segmenting comprising identifying a first segment component corresponding to a plurality of first voxels and a second segment component corresponding to a plurality of second voxels different from the plurality of first voxels; performing a measurement with respect to the plurality of first voxels; and computing the technical instruction for the handling of the object based on the segmented voxel representation and the measurement, wherein said segmenting relates to at least one trained NN being trained with respect to the 3D surface.

## Description

### Field of the invention

The present invention relates to performing measurements with respect to a 3D physical object, e.g. by means of robots, based on deep learning.

### Background art

In image analysis of 3D objects in the context of robot automation, visualization and 3D image reconstruction is fundamental for enabling accurate handling of physical objects. Image data may be a mere set of 2D images, requiring extensive processing in order to generate appropriate robot commands that take into account the features of the object as well as the requirements of the application.

In particular, a problem with known methods may be to take into account the structure of the object, including the 3D surface, for which the handling may depend critically on the handling portion of the 3D object.

US20190087976A1 discloses an information processing device includes a camera and a processing circuit. The camera takes first distance images of an object for a plurality of angles. The processing circuit generates a three-dimensional model of the object based on the first distance image, and generates an extracted image indicating a specific region of the object corresponding to the plurality of angles based on the three-dimensional model. Thereby, US20190087976A1 discloses examples of estimated gripping locations for coffee cups by deep learning, wherein the deep learning may relate to neural networks such as convolutional neural networks. However, US20190087976A1 does not disclose details of training and using the convolutional neural networks.

EP3480730A1 discloses computer-implemented method for identifying features in 3D image volumes includes dividing a 3D volume into a plurality of 2D slices and applying a pre-trained 2D multi-channel global convolutional network (MC-GCN) to the plurality of 2D slices until convergence. However, EP3480730A1 does not disclose handling of 3D objects.

WO2019002631A1 discloses 3D modelling of 3D dentomaxillofacial structures using deep learning neural networks, and, in particular, though not exclusively, to systems and methods for classification and 3D modelling of 3D dentomaxillofacial structures using deep learning neural networks and a method of training such deep learning neural networks. However, also WO2019002631A1 does not disclose handling of 3D objects.

US20180218497A1 discloses CNN likewise but does not disclose handling of 3D objects.

The document (Weinan Shi, Rick van de Zedde, Huanyu Jiang, Gert Kootstra, Plant-part segmentation using deep learning and multi-view vision, Biosystems Engineering 187:81-95, 2019) discloses 2D images and 3D point clouds and semantic segmentation but does not disclose handling of 3D objects.

The present invention aims at addressing the issues listed above.

### Summary of the invention

According to an aspect of the present invention, a method is provided for generating a technical instruction for handling a three-dimensional, 3D, physical object present within a reference volume, the object comprising a 3D surface. The method comprises obtaining at least two images of the object from a plurality of cameras positioned at different respective angles with respect to the object; generating, with respect to the 3D surface of the object, a voxel representation segmented based on the at least two images, said segmenting comprising identifying a first segment component corresponding to a plurality of first voxels and a second segment component corresponding to a plurality of second voxels different from the plurality of first voxels; performing a measurement with respect to the plurality of first voxels; and computing the technical instruction, the technical instruction preferably comprising a robot command, for the handling of the object based on the segmented voxel representation and the measurement, wherein said segmenting relates to at least one trained NN being trained with respect to the 3D surface.

A main advantage of such a method is an improved handling of an object.

In embodiments, the technical instruction comprises a robot command, wherein the robot command is executable by means of a device comprising a robot element configured for handling the object. An advantage is the accurate and robust robot control provided by such a method.

In embodiments, the method may further comprise pre-processing of the at least two images based on a mask projection for distinguishing foreground from background, said mask projection being based at least partially on a mask-related 3D reconstruction of the 3D surface of the object, the mask-related 3D reconstruction preferably being said voxel representation. The inventors have interestingly found that pre-processing by means of, e.g., voxel carving, allows the method to suppress or handle noise in the at least two images.

In embodiments, said segmenting may further comprise identifying a third segment component corresponding to a plurality of third voxels, comprised in the plurality of first voxels, wherein at least one of the first voxels does not belong to the third voxels, wherein the measurement is performed further with respect to the plurality of third voxels. In preferred embodiments, the measurement is performed further with respect to the plurality of second voxels. Advantageously, the accuracy of handling the object is improved.

In embodiments, the 3D surface of the object may be a plant. The plant may comprise, one or more leaves (e.g., foliage, appendage, lobe or cotyledon), corresponding to the first segment component and preferably one or more stems corresponding to the third segment component. In preferred embodiments, the plant further comprises soil and/or one or more roots, corresponding to the second segment component. Therefore, the method ensures that the plant is more effectively handled.

In embodiments, the step of generating comprises: performing a 3D reconstruction of the 3D surface of the object based on the at least two images for obtaining a voxel representation, and obtaining said segmented voxel representation by projecting at least the first segment component with respect to said voxel representation.

In embodiments, the at least one trained NN may comprise an instance and/or a semantic segmentation NN. In preferred embodiments, the instance segmentation NN may be a 2D region-based convolutional neural network, R-CNN, more preferably being a Mask R-CNN for segmenting the at least two images; and the semantic segmentation NN may be a 2D convolutional neural network, CNN, more preferably being a 2D U-net or a rotation equivariant 2D NN for segmenting the at least two images.

As known to the skilled person, instance segmentation NNs differ from semantic segmentation NNs in terms of algorithm and output, even in cases where the input, e.g. the images, are identical or very similar. In general, semantic segmentation may relate, without being limited thereto, to detecting, for every pixel (in 2D) or voxel (in 3D), to which class of the object the pixel belong. In examples, all stems of a multi-stemmed rose or all leaves of a rose may be segmented according to a single segment class.

In embodiments, 3D semantic segmentation, preferably operating on a 3D point cloud generated from 2D images, relates to 3D U-net, Dynamic Graph CNN (DGCNN) and/or PointNet++.

U-net is found to be particularly suitable due to increased speed and/or increased reliability, enabled by data augmentation and elastic deformation. Applicant has found such rotation equivariant NNs to be particularly useful for objects comprising a main direction, as distinguished from other problems for which a rotation equivariance NN may be less useful.

Instance segmentation, on the other hand, may relate, without being limited thereto, to detecting, for every pixel, a belonging instance of the object. It may detect each distinct object of interest in an image. In examples, multiple plants in a single image or 3D point cloud may be identified as individual objects. In examples, multiple instances of a portion of a 3D object, such as individual stems of a multi-stemmed plant or individual leaves of a plant, may be identified as individual object portions. Mask R-CNN is an intuitive extension of Faster R-CNN and is found to be particularly suitable due to increased simplicity and effectiveness. Other examples of 2D instance segmentation, preferably operating on 2D images, relate to SOLO, SOLOv2, DeepMask and TensorMask.

In embodiments, 3D instance segmentation, preferably operating on a 3D point cloud generated from 2D images, relates to 3D-BoNet and/or ASIS.

In embodiments, 2D semantic and instance segmentation, preferably operating on 2D images, relates to panoptic segmentation, such as FPSNet.

In embodiments, 3D semantic and instance segmentation, preferably operating on a 3D point cloud generated from 2D images, relates to 3D-SIS and/or CF-SIS.

In preferred embodiments, the step of obtaining said segmented voxel representation by semantic segmentation may comprise performing clustering with respect to said projected at least first segment component.

The advantage of clustering is that it provides flexibility in data analysis. For example, structured and/or unstructured data of the at least two images and/or the voxel representation can be summarized in a more compact representation (i.e., groups, partitions, segments, instances, etc.) for improved segmentation of the data. Furthermore, the data can be used to evaluate a presence of outliers.

In embodiments, said performing of said 3D reconstruction may comprise determining RGB values associated with each voxel based on said at least two images, wherein said 3D (semantic and/or instance) segmenting is performed with respect to said voxel representation comprising said RGB values by means of a NN trained with RGB data.

In embodiments, the measurement may relate to counting with respect to the segmented voxel representation, for example counting the plurality of respective voxels. In preferred embodiments, the segmented voxel representation is obtained via semantic segmentation for counting clusters of voxels (e.g., clusters obtained by performing clustering) and/or instance segmentation for counting instances.

Furthermore, the measurement may comprise determining any one or combination of: a number of elements, an area and a volume of said segment component based on counting with respect to the segmented voxel representation, for example counting of the plurality of the respective voxels. In preferred embodiments, the measurement may comprise determining any one or combination of: a height and an angle of said segment component with respect to a main direction comprised in the reference volume based on counting of a plurality of voxels associated with said segment component along the main direction. In further preferred embodiments, the measurement may comprise determining quality of the object or portions thereof, for example determining plant health and/or quality, determining quality and/or health of parts of a plant (e.g., leaves, roots, etc.), determining quality of a manufactured ball (e.g., golf ball, ping pong ball, pool ball etc.).

In general, semantic segmentation may relate, without being limited thereto, to detecting, for every pixel (in 2D) or voxel (in 3D), to which class of the object the pixel belong. Instance segmentation, on the other hand, may relate, without being limited thereto, to detecting, for every pixel, a belonging instance of the object. It may detect each distinct object of interest in an image. In embodiments, 2D instance segmentation, preferably operating on 2D images, relates to SOLO, SOLOv2, Mask R-CNN, DeepMask, and/or TensorMask. In embodiments, 3D instance segmentation, preferably operating on a 3D point cloud generated from 2D images, relates to 3D-BoNet and/or ASIS.

In embodiments, an area at an interface between the plurality of first and second voxels may be interpolated with respect to an opening of the plurality of first voxels for performing said measurement.

In 3D point clouds, an area at an interface between segment components and/or elements or instances thereof is not known. The present invention provides a method that allows to perform said determining. Thus, an advantage of the above embodiments is a more effective and accurate handling of the object based on the measurement.

In embodiments, the invention may not be limited to a robot command for handling the object, rather the invention may relate to a classifying method relating to any scope relating to handling the object.

In preferred embodiments, the handling relates to physically handling the object, such as physically sorting, physically separating a sample from the object, etc.

In preferred embodiments, the handling may comprise physically sorting the object according to respective physical destination locations corresponding to respective classes relating to the measurement with respect to segmented voxel representation, for example the plurality of respective voxels. Advantageously, the method provides an improved handling of the object, where the object is more accurately physically sorted.

In preferred embodiments, the handling comprises physically separating a sample from the object at a handling coordinate based on said measurement. The robot command preferably comprises a 3D approaching angle for reaching the respective handling coordinate on said object. Advantageously, the method provides an improved handling of the object, where the sample is more accurately separated from the object.

In embodiments, the 3D approaching angle for reaching the handling coordinate on said object may relate to a 3D sampling angle for separating the sample at the handling coordinate. In preferred embodiments, the 3D sampling angle may be comprised in the robot command.

In further embodiments, the method may comprise actuating the robot element based on the robot command. In preferred embodiments, said actuating may comprise: approaching, by the robot element, the 3D surface at the 3D approaching angle; and separating, by the robot element, the sample from the object at the handling coordinate.

In preferred embodiments, the step of separating may comprise surrounding, by at least two distal ends of the robot element, a receiving portion of the object at the 3D sampling angle. Alternatively, the step of separating may not comprise surrounding the receiving portion but rather comprise, e.g., punching, by at least one distal end of the robot element, the receiving portion. Furthermore, the 3D sampling angle may preferably relate to an orientation of the two distal ends of the robot element with respect to a main plane of the receiving portion. For example, the two distal ends may be essentially parallel to the main plane.

Therefore, the method provides an improved control of a robot element for ensuring that the robot element does not collide with the object, particularly with a receiving section of the object, when approaching and/or sampling (i.e., separating a portion from the object) the object.

According to a second aspect of the present invention, a device is provided for handling a three-dimensional, 3D, physical object present within a reference volume, the object comprising a main direction and a 3D surface. The device comprising a robot element, a processor and memory comprising instructions which, when executed by the processor, cause the device to execute a method according to the present invention.

According to a further aspect of the present invention, a system for handling a three-dimensional, 3D, physical object present within a reference volume, the object comprising a 3D surface, the system comprising: a device, preferably the device according to the present invention; a plurality of cameras positioned at different respective angles with respect to the object and connected to the device; and preferably a robot element comprising actuation means and connected to the device, wherein the device is configured for: obtaining at least two images of the object from a plurality of cameras positioned at different respective angles with respect to the object; generating, with respect to the 3D surface of the object, a voxel representation segmented based on the at least two images, said segmenting comprising identifying a first segment component corresponding to a plurality of first voxels and a second segment component corresponding to a plurality of second voxels different from the plurality of first voxels; performing a measurement with respect to the plurality of first voxels; and computing a technical instruction, said technical instruction preferably comprising a robot command, for the handling of the object based on the segmented voxel representation and the measurement, wherein said segmenting relates to at least one trained NN being trained with respect to the 3D surface, wherein preferably the robot command is executable by means of a device comprising a robot element configured for handling the object.

### Brief description of the drawings

The present invention will be discussed in more detail below, with reference to the attached drawings, in which:
Fig. 1 illustrates example embodiments of a method according to the invention;
Fig. 2 provides an overview of example embodiments of a method according to the invention;
Fig. 3 illustrates an image acquisition step of example embodiments of a method according to the invention;
Fig. 4 illustrates a segment confidence mask step of example embodiments of a method according to the invention;
Fig. 5 illustrates a 3D annotated point cloud step of example embodiments of a method according to the invention;
Fig. 6 illustrates a measurement step with respect to the 3D annotated point cloud of example embodiments of a method according to the invention;
Fig. 7 illustrates example embodiments of a method according to the invention with 3D NN;
Figs. 8A and 8B illustrate example embodiments of a GUI with 2D annotation;
Fig. 9 illustrates example embodiments of a GUI with 3D annotation;
Figs 10A and 10B illustrate example embodiments of a method according to the invention;
Fig. 11 illustrates a device according to the invention; and
Fig. 12 illustrates a system comprising the device of Fig. 11 according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

The term "reference volume" is to be interpreted as a generic descriptor of the space surrounding the 3D object, wherein a reference volume can be defined according to a three-dimensional reference system, such as Cartesian coordinates in three dimensions. This term does not imply any constraint with respect to these dimensions.

In embodiments, the technical instruction may relate to a robot command, e.g., for instructing a robot element. In alternative embodiments the technical instruction relates to an instruction for alerting or notifying an operator. For instance, said instruction may comprise information relating to a class of an object, and said technical instruction may be read by visual and/or acoustic output means for the operator to act there upon.

In embodiments, the at least one trained NN may be a semantic segmentation NN, preferably a (2D and/or 3D) convolutional neural network, CNN, more preferably a (2D and/or 3D) U-net.

The term "U-net" may relate to the CNN as described in, e.g., (Ronneberger, Olaf; Fischer, Philipp; Brox, Thomas (2015). "U-net: Convolutional Networks for Biomedical Image Segmentation. ArXiv:1505.04597") and (Long, J.; Shelhamer, E.; Darrell, T. (2014). "Fully convolutional networks for semantic segmentation". ArXiv:1411.4038).

Neural networks (NN) need to be trained to learn the features that optimally represent the data. Such deep learning algorithms includes a multilayer, deep neural network that transforms input data (e.g. images) to outputs while learning higher level features. Successful neural network models for image analysis are semantic segmentation NNs. One example is the so-called convolutional neural network (CNN). CNNs contain many layers that transform their input using kernels, also known as convolution filters, consisting of a relatively small sized matrix. Other successful neural network models for image analysis are instance segmentation NNs. As known to the skilled person, instance segmentation NNs differ from semantic segmentation NNs in terms of algorithm and output, even in cases where the input, e.g. the images, are identical or very similar.

The term neural network, NN, refers to any neural network model. The NN may comprise any or any combination of a multilayer perceptron, MLP, a convolutional neural network, CNN, and a recurrent neural network, RNN. A trained NN relates to training data associated with a neural network based model.

In alternative embodiments, instead of a 2D CNN, also a 2D NN that is not convolutional may be considered. In preferred embodiments, segmentation in three dimensions is done with a neural network that may either be convolutional, such as a DGCNN, or non-convolutional, such as PointNet++. In embodiments, another variant of PointNet++ relating to PointNet may be considered without altering the scope of the invention. In preferred embodiments, semantic segmentation with a 2D CNN relates to u-net. In preferred embodiments, semantic segmentation with a 3D NN relates to DGCNN or PointNet++. Herein, DGCNN may relate to methods and systems described in (Yue Wang et al., Dynamic Graph CNN for Learning on Point Clouds, CoRR, 2018, http://arxiv.org/abs/1801.07829), and PointNet++ may relate to methods and systems described in (Charles R. Qi et al., PointNet++: Deep Hierarchical Feature Learning on Point Sets in a Metric Space, 2017, https://arxiv.org/abs/1706.02413).

In embodiments, the at least one trained NN may be rotation equivariant. In embodiments, the NN may be translation and rotation equivariant. Rotation equivariant NNs are known for specific applications, see, e.g., the "e2cnn" software library, see (Maurice Weiler, Gabriele Cesa, General E(2)-Equivariant Steerable CNNs, Conference on Neural Information Processing Systems (NeurIPS), 2019).

In many applications, the objects of interest do indeed always appear in the same orientation in the image. For example, in street scenes, pedestrians and cars are usually not "upside down" in the image. However, in applications where a main direction or a main plane is to be determined, there is no such predetermined direction; and the object appears in a variety of orientations.

In embodiments with a 2D rotation equivariance NN, U-Net-like architectures are preferred, preferably based on rotation equivariant operators from (Maurice Weiler, Gabriele Cesa, General E(2)-Equivariant Steerable CNNs, Conference on Neural Information Processing Systems (NeurIPS), 2019). In embodiments with a 2D NN, some of the translational equivariance that is lost in typical naive max pooling down-sampling implementations is recovered based on the method disclosed in (Richard Zhang. Making Convolutional Networks Shift-Invariant Again, International Conference on Machine Learning, 2019).

In embodiments, the NN involves only equivariant layers. In embodiments, the NN involves only data augmentation. In embodiments, the NN involves both equivariant layers and data augmentation.

In embodiments with a 3D rotation equivariance NN, the NN preferably comprises one or more neural network architectures based on the "e3cnn" library, see (Mario Geiger et al, (2020, March 22). github.com/e3nn/e3nn (Version v0.3-alpha). Zenodo. doi:10.5281/zenodo.3723557). The "e3cnn" library, like the "e2nn" library, contains definitions for convolutional layers that are both rotation and translation equivariant.

In embodiments, the at least one trained NN may be an instance segmentation NN, preferably a (2D and/or 3D) region-based convolutional neural network, R-CNN, more preferably a Mask R-CNN, 3D-BoNet and/or ASIS. A detailed description of Mask R-CNN is found in, e.g., (Kaiming He, Georgia Gkioxari, Piotr Dollar, Ross Girshick (2017). "Mask R-CNN. ArXiv:1703.06870"). A detailed description of 3D-BoNet is found in, e.g., (Bo Yang et al., (2019). Learning Object Bounding Boxes for 3D Instance Segmentation on Point Clouds, arXiv:1906.01140v2). A detailed description of ASIS is found in, e.g., (Xinlong Wang et al. (2019). Associatively Segmenting Instances and Semantics in Point Clouds, arXiv:1902.09852v2).

The term "Semantic-Instance Segmentation", also referred to as SIS may relate to the method as described in (Ji Hou et al. (2018, December 17). 3D-SIS: 3D Semantic Instance Segmentation of RGB-D Scans. Computer Vision and Pattern Recognition, arXiv:1812.07003v3) and in (Xin Wen, et al. (2020). CF-SIS: Semantic-Instance Segmentation of 3D Point Clouds by Context Fusion with Self-Attention. Proceedings of the 28th ACM International Conference on Multimedia. Association for Computing Machinery, New York, NY, USA, 1661-1669. DOI: https://doi.org/10.1145/3394171.3413829).

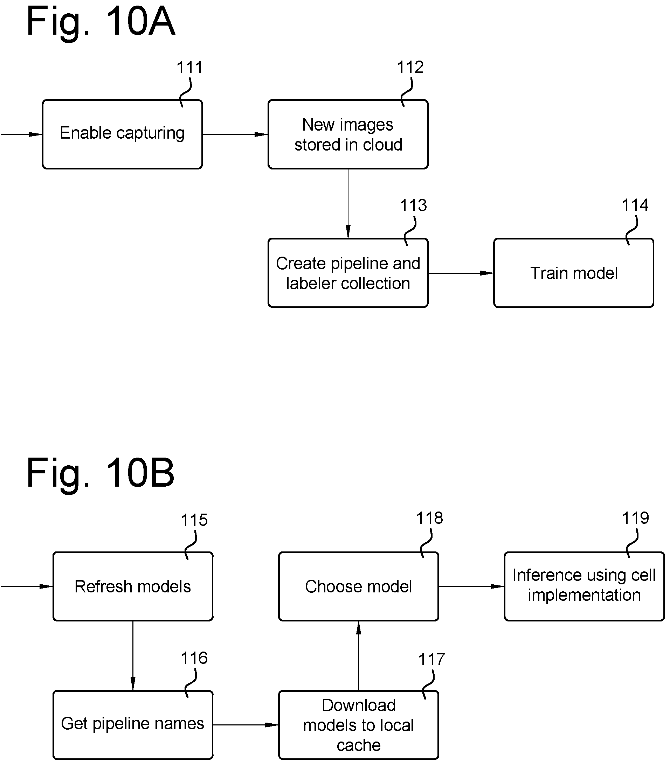

Embodiments of a method for training and using a NN according to the invention will be described with reference to Figs. 10A and 10B. Fig. 10A shows a method comprising a step of enabling (111) capturing of images, for e.g. by at least cameras (3) as described below. The captured images may be stored (112) in a server or in a memory comprised therein. The server may comprise a local server and/or a cloud server. Furthermore, the captured images may be used to create a dataset, preferably a training set, which can be considered as a pipeline and labeller collection. Said collection may be created using a GUI (101; 103) as described below with reference to Example 10 and Example 11. Furthermore, said collection may be stored in the server or in the memory therein. Furthermore, a model is learned or trained (114) on the training set, preferably the model being a NN model. Typically, cross-validation is used to train a model, where the dataset is divided into several partitions according to the type of cross-validation (leave-one-out, k-fold, etc.). A training strategy can be applied to the NN to obtain the minimum loss possible, by searching for a set of parameters that fit the NN to the training set. A general strategy consists of a loss index, or preferably an optimization algorithm. There are many different optimization algorithms, which have a variety of different computation and storage requirements. Several algorithms have been proposed herein. Finally, the trained model may be stored in the server or in the memory comprised therein.

Fig. 10B shows a method comprising a step of refreshing (115) one or more models, for e.g. the trained NN models. The refreshing (115) comprises updating the trained one or more models, for e.g., by including new data points to the training set, changing the type of cross-validation, updating the pipeline and labeller collection, etc. Names of the created, preferably stored pipeline and labeller collections may be obtained, for e.g., by requesting said names from the server or memory therein. Furthermore, the trained models may be downloaded (117), and preferably stored in a local memory (e.g. cache, RAM, ROM). The user may then choose (118) a model from among the downloaded models or the models in the local memory. The step of choosing (118) may comprise determining a model from the one or more trained models based on the names of the pipeline and labeller collection, the type of model, on a performance measure of the model, etc. That way, the one or more models can work locally without the need for a connection to the server. Finally, an inference or prediction may be performed (119) by implementing the chosen model, which can be, for e.g., implemented as a cell in a programming language, such as Python.

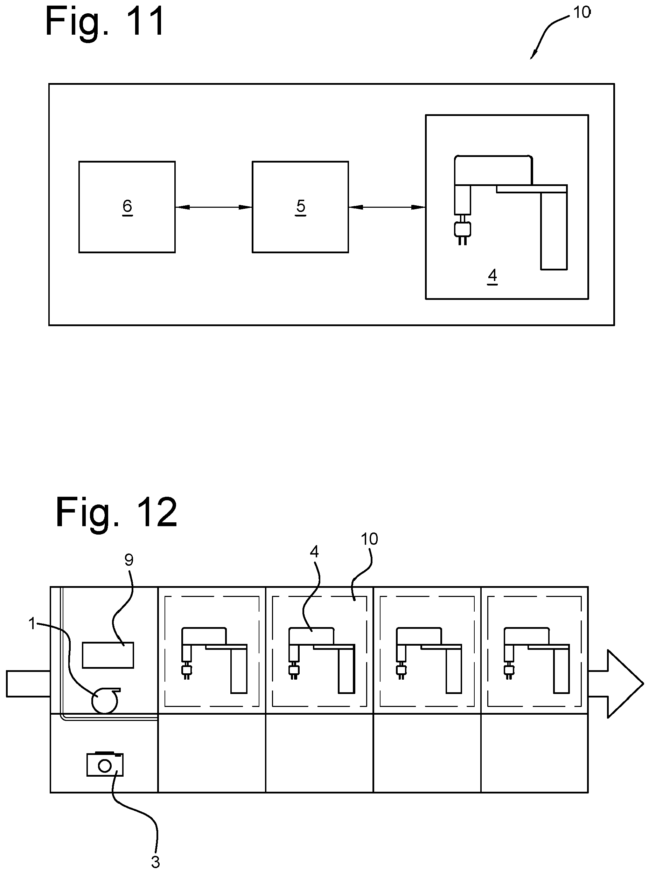

Embodiments of a device (10) according to the present invention will be described with reference to Fig. 11. Fig. 11 shows a device comprising a robot element (4), a processor (5) and memory (6). The memory (6) may comprise instructions which, when executed by the processor (5), cause the device (10) to execute a method according to any embodiment of the present invention. The processor (5) may additionally or alternatively comprise the instructions.

The device (10) may comprise one or more robot elements (4) electrically connected to the processor (5). The one or more robot elements (4) may comprise actuation means, and the one or more robot elements (4) may be configured to handle a physical object (1) using the actuation means upon receiving a robot command (2) from the processor (5).

The robot element (4) may comprise one or more distal ends configured to handle, preferably physically handle the object (1). Examples of said distal ends are fingers, extremities, tentacles, clamping means, etc. Examples of handling the object (1) will be described in more detail below, with reference to Example 12 and Example 13.

Embodiments of a system for handling a 3D physical object will be described with reference to Fig. 12. Fig. 12 shows a system comprising a plurality of cameras (3) and one or more robot elements (4) preferably comprised in one or more devices (10) as disclosed with reference to Fig. 11. For example, one or more robot elements (4) comprised in one device (10) and/or one or more robot elements (4) each comprised in one or more devices (10).

The plurality of cameras (3) are positioned at different respective angles with respect to the object (1) and electrically connected to the one or more devices (10). Preferably, the plurality of cameras (3) are electrically connect to the processor (5) in each of the one or more devices (10).

The system may comprise a light source (9) for improving the capturing of at least two images (30) by the plurality of cameras (3). The light source (9) may be any one or combination of a key light, a fill light and a back light (e.g. three-point lighting). A size and/or intensity of the light source (9) may be determined relative to a size of the object (1). A position of the light source (9) may be positioned relative to a position of the object (1) and/or the plurality of cameras (3). A combination of any of the size, intensity and position of the light source (9) may dictate how "hard" (i.e., shadows with sharp, distinctive edges) or "soft" (shadows with smooth feathered edges) shadows relating to the object (1) will be.

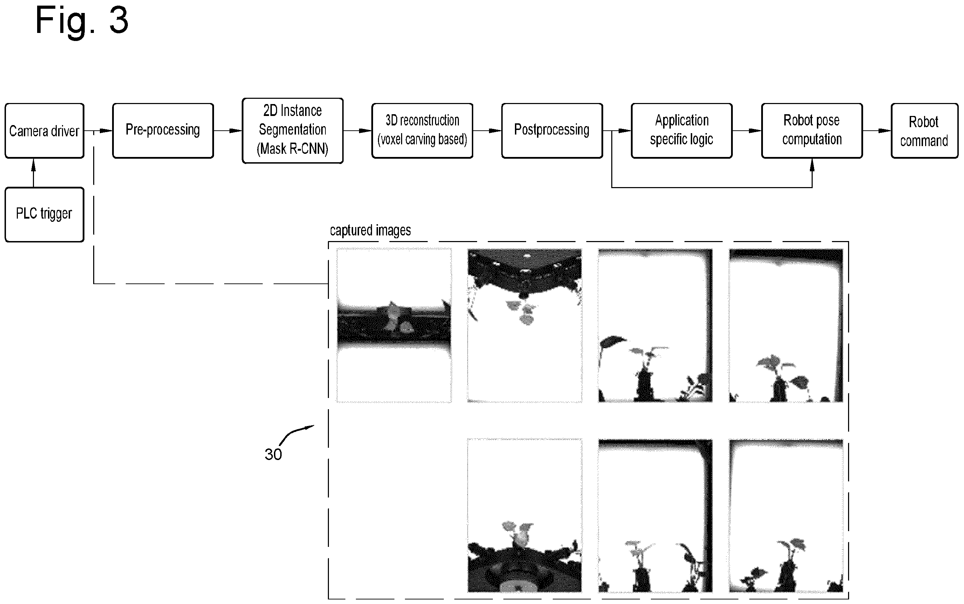

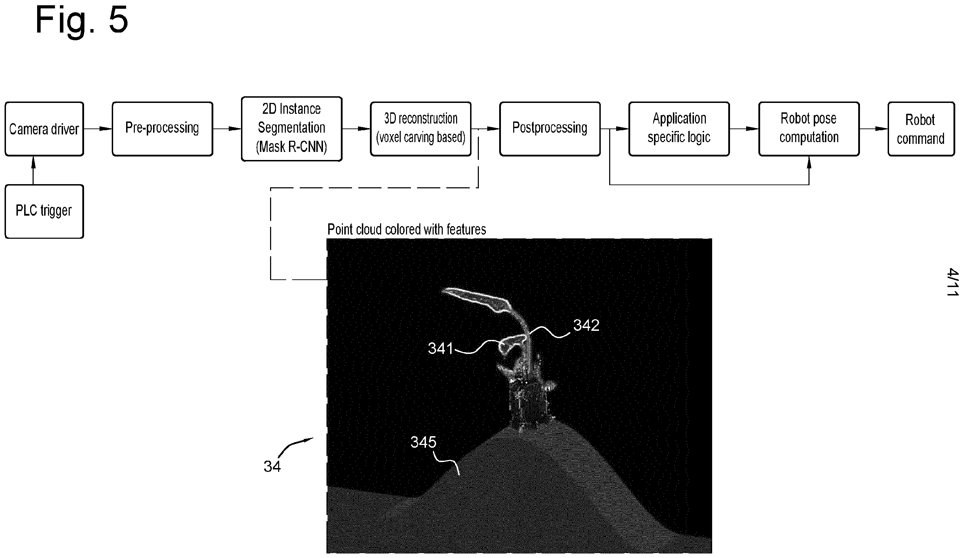

In the embodiment of Fig. 12, the object (1) is provided, for e.g. by means of a conveyor belt or other transport means known in the art (as shown in images 30 in Fig. 3 and reference 345 in the 3D point cloud 34 in Fig. 5), in a direction corresponding to, for e.g., a direction from an input of the system to an output of the system (shown as an arrow in Fig. 12). As shown in Fig. 12, the object (1) is provided to a first part of the system wherein the plurality of cameras are positioned. Thereafter, the object (1) is provided to a second part wherein a robot element (4) is configured to handle the object (1). The system may comprise a plurality of second parts each comprising a robot element (4) and a device (10), as shown in Fig. 12.

In embodiments, at least one of said plurality of cameras (3) is a hyperspectral camera, wherein said computing of said robot command is further based on values of pixels whereof at least the intensity is determined based on hyperspectral image information. This may lead to enhanced performance and/or robustness for applications wherein part of the 3D surface information of the object (1) may be obtained outside of the visual spectrum. This is particularly advantageous in cases wherein the object (1) comprises a portion of a plant, enabling plant health evaluation and plant disease detection, wherein use of hyperspectral cameras allows earlier detection of plant diseases compared to the standard RGB imaging. This relates to the fact that healthy and affected plant tissue show different spectral signatures, due to different water content, wall cell damage and chlorophyll concentration of plants. In preferred embodiments, the spectral band processed by the one or more hyperspectral cameras does not comprise the entire visible spectral band, as this may optimize processing time. In embodiments, RGB imaging is used additionally or alternatively to determine plant health (e.g., plant diseases, etc.).

In embodiments, the processed spectral band is obtained by shifting the visible spectral band. In embodiments, a frequency shift or, equivalently, a wavelength shift is performed such that the processed spectral band overlaps at least partially with the near infrared band between 700 nm and 2500 nm, and/or the near infrared band between 428 THz and 120 THz. This corresponds to infrared bands with particular relevance for plant health. In embodiments, this relates to a wavelength shift of at least 10%, more preferably at least 50% and/or preferably by applying a wavelength offset of at least 100 nm, more preferably at least 500 nm.

In embodiments, the plurality of cameras (3) located at a plurality of camera positions may be replaced by a single camera shooting images from each of the plurality of camera positions. Such embodiments may involve a switch-over time for the camera to move from one camera position to the next camera position, which may increase the latency in acquiring. This may have the advantage of cost reduction, using a single camera instead of several cameras.

In embodiments, the plurality of cameras (3) located at a plurality of camera positions may be replaced by a single camera shooting images of the object (1) according to a plurality of object positions. In such embodiments, the object (1) may be movingly, e.g., rotatably, positioned with respect to the single camera. Such embodiments may involve a switch-over time for the object to move from one object position to the next object position, which may increase the latency in acquiring images. This may have the advantage of cost reduction, using a single camera instead of several cameras.

In embodiments, a non-transient computer readable medium containing a computer executable software which when executed on a computer system (e.g. the device) performs the method as defined herein by the embodiments of the present invention. A non-transient computer readable medium may include an electrical connection having one or more wires, a portable computer diskette, a hard disk, a random access memory (RAM), a read-only memory (ROM), an erasable programmable read-only memory (EPROM or flash memory), a portable compact disc read-only memory (CD-ROM), an optical storage device, a magnetic storage device, or any suitable combination of the foregoing. In the context of this document, a non-transient computer readable medium may be any tangible medium that can contain, or store a program for use by or in connection with an instruction execution system, apparatus, device or module.

Below, the invention is illustrated according to a plurality of example embodiments, which are not intended to limit the scope of the invention in any way.

### Example 1: example embodiments according to the invention

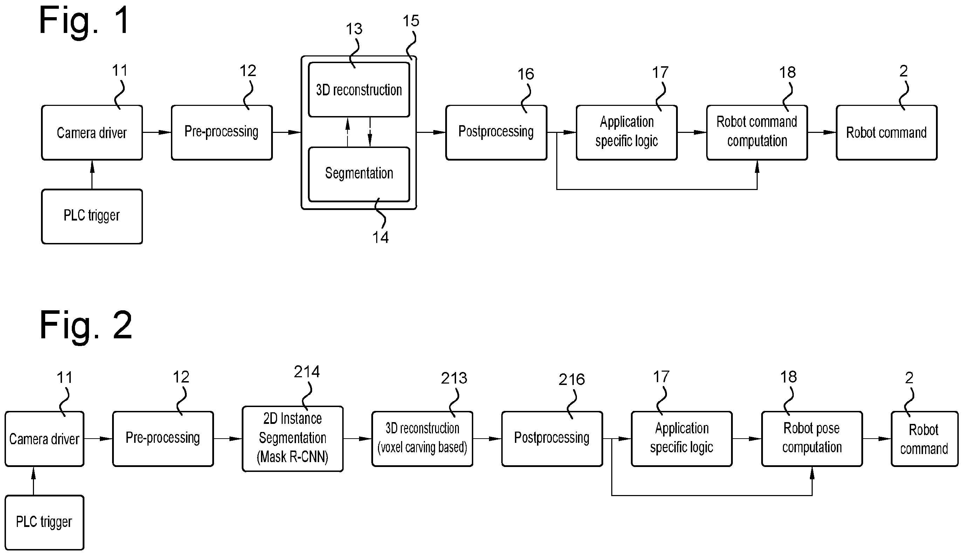

Fig. 1 illustrates example embodiments of a method according to the invention. It relates to a method for generating a technical instruction, such as a robot command (2), for handling a three-dimensional, 3D, physical object (1) present within a reference volume and comprising a 3D surface. It comprises the step of, based on a PLC trigger, obtaining (11) at least two images (30) of said physical object (1) from a plurality of cameras (3) positioned at different respective angles with respect to said object (1).

### Each of the images is subject to pre-processing (12), such as a threshold which may preferably be an application-specific pre-determined threshold, to convert them into black and white, which may be fed as a black and white foreground mask to the next step, either replacing the original images or in addition to the original images.

The next step comprises generating (15), with respect to the 3D surface of said object (1), a voxel representation segmented based on said at least two images (30).

The generating (15) comprises segmenting (14) said 3D surface by means of at least one trained neural network, NN, as well as performing (13) a 3D reconstruction of said 3D surface of said object (1). Said segmenting (14) comprising identifying a first segment component corresponding to a plurality of first voxels and a second segment component corresponding to a plurality of second voxels different from the plurality of first voxels.

In the next step, post-processing (16) is performed, which may relate for instance to performing a measurement with respect to the segmented voxel representation (e.g., the plurality of first voxels), similar to the post-processing discussed in Example 2. Other examples, such as continuity checks and/or segmentation checks will also be discussed.

As will be understood herein, the plurality of first voxels relate to voxels of interest corresponding to a first portion of interest of the object (1). The plurality of second voxels relate to voxels of non-interest corresponding to a second portion of non-interest of the object (1). For example, the first voxels may be a mutually exclusive set of voxels. Preferably, said first and second portions are different. Furthermore, the measurement relates to an application specific logic, where the voxels of one or more (different) segment components can be voxels of interest. This will be described in more detail in Example 2.

A next step relates to application specific logic (17), wherein details of, e.g., the robot element actuation are determined. This may relate for instance to single actions (e.g. physically sorting), or combined actions in any order (e.g. physically sorting and sampling), as discussed for Example 12 and Example 13.

In a final step, the technical instruction, e.g., the robot command (2) for said handling of said object (1) is computed (18) based on the segmented voxel representation and the performed measurement.

Thereby, said handling of said object (1) by said robot command (2) relates to an actuation of a robot element (4) based on the segmented voxel representation and the performed measurement. Said handling of said object (1) by the technical instruction other than the robot command (2), e.g., provided to an operator relates to the handling of the object (1) based on the segmented voxel representation and the performed measurement. Preferably, said NN comprises a U-net, RotEqNet, PointNet++, DGCNN and/or Mask R-CNN.

As will be understood herein, the invention involves obtaining at least two images (30) of the physical object (1). The number of images being at least two relates to the number of images required to create a convex voxel representation with a non-infinite size also being at least two. However, it may be clear that a larger number of images may result in higher accuracy for the voxel representation and/or improved ability to handle objects with non-convex and/or irregular shape. The number of images obtained may be two, three, more than three, four, or more than four. For instance, the number of images may be seven, as in the case of Example 2.

### Example 2: example embodiments with 2D instance segmentation according to the invention

Figs. 2-6 illustrate steps of example embodiments of a method according to the invention, wherein the NN is an instance segmentation NN, particularly a CNN, more particularly a Mask R-CNN.

Fig. 2 provides an overview of example embodiments of a method according to the invention. In this example, the object (1) is a plant present in the reference volume comprising one or more leaves, one or more stems, one or more roots and soil. The plant is handled, for e.g. physically sorting the plant or physical separating a portion of the plant therefrom. The plant (1) is transported by transporting means (e.g., conveyor belt) and at a certain position during the transport, the plant is surrounded by at least two cameras (3), in this example seven cameras positioned at different respective angles with respect to said plant. A uniform planar light source (9) of high intensity is placed behind the object to ensure high contrast, which is beneficial for the further processing steps of the images.

In Fig. 2, the step of generating (15) the segmented voxel representation comprises a 2D instance segmentation (214) of the at least two images (30) by means of at least one trained 2D CNN, preferably a Mask R-CNN. Following the step 2D segmenting (214), the generating (15) further comprises performing (213) a 3D reconstruction of the 3D surface of the object (1), preferably the 3D reconstruction is based on voxel carving.

Fig. 3 illustrates an image acquisition step of example embodiments of a method according to the invention. The image acquisition may be triggered by a PLC trigger. In this example embodiment, seven images (30) of the object (1) are acquired. In this example, each of the images is subject to minimal or no processing (e.g., the RGB values of the pixels in the 2D images (30) are minimally or not altered), maintaining colour information present in the images, for allowing improved accuracy, and at least the colour images foreground masks are fed to the at least one trained CNN (214).

In alternative or additional embodiments, each or some of the images (30) may be preprocessed, e.g., said images (30) may be subject to a threshold (12) to convert them into black and white, and fed as a black and white foreground mask to the at least one trained CNN (214) of this example. This has the effect to make the detection performed by the trained CNNs largely insensitive to light variation. In other embodiments, each of the images is furthermore subject to a greyscale processing to make the detection less sensitive to light variation while maintaining greyscale image information for allowing accurate positioning, and at least the greyscale images and optionally also the black and white foreground masks are fed to the at least one trained CNN (214).

Other mask refining techniques known in the art may be used. A background may be detected in the original image and/or the black and white image/mask and subtracted therefrom if necessary. The object (1) may be detected as the largest connected component in the original image and/or the black and white image/mask. The object detection may also be known as Connected-component labelling (CCL), connected-component analysis (CCA), blob extraction, region labelling, blob discovery, or region extraction. Furthermore, the image or mask may be cropped to only include the object (1). Furthermore, the image or mask, preferably the cropped image or mask may be scaled to a predetermined resolution. The original image may be first scaled, and then re-scaled after performing any of the above pre-processing steps. The predetermined resolution is preferably lower than the resolution of the original image. Algorithms known in the art may be used in image (re-)scaling, such as nearest-neighbour interpolation, vectorization, deep convolutional neural networks, etc. In embodiments, upon detecting the object 1, a background may be detected in the original image or the black and white image/mask and subtracted from said image or mask.

In embodiments, the pre-processing (12) is performed on the at least two images (30) based on a mask projection for distinguishing foreground from background, said mask projection being based at least partially on a mask-related 3D reconstruction of the 3D surface of the object (1), said mask-related 3D reconstruction preferably being said voxel representation.

In embodiments, the pre-processing (12) comprises projecting the original image and/orthe black and white image/mask to a 3D surface, for example, performing a 3D reconstruction (e.g., voxel carving) of the 3D surface of the object (1) based on at least the two or more images. The voxel representation may allow the generation of one or more foreground and/or background masks through projection. For instance, the voxel representation may be projected onto a 2D surface, for example, generating, with respect to the original image and/or black and white image/mask, at least two images having foreground and background masks, preferably only foreground masks. Said at least two images may then be fed to the next step of 2D segmenting (214) said at least two images (i.e., having foreground masks or additionally background masks) for determining one or more segment components corresponding to, e.g., protruding portions of the object (1) in each of said at least two images or the original images (30). Thus, the foreground and background masks can be more precisely segmented. Furthermore, noise can be more effectively suppressed/handled in the at least two images.

Advantageously, the pre-processing (12) allows to determine and suppress noise in the at least two images (30), for instance noise resulting from an obstruction. For said suppression it suffices that at least one camera from among the plurality of cameras (3) is not impacted by said noise. This may relate to a source of noise not being present and/or in the field of view of said at least one camera.

In embodiments, the resolution may be kept low to keep processing speed high, working at resolutions such as (in pixels) 56 x 56, 64 x 64, 112 x 112, 128 x 128, 224 x 224, 256 x 256, etc.

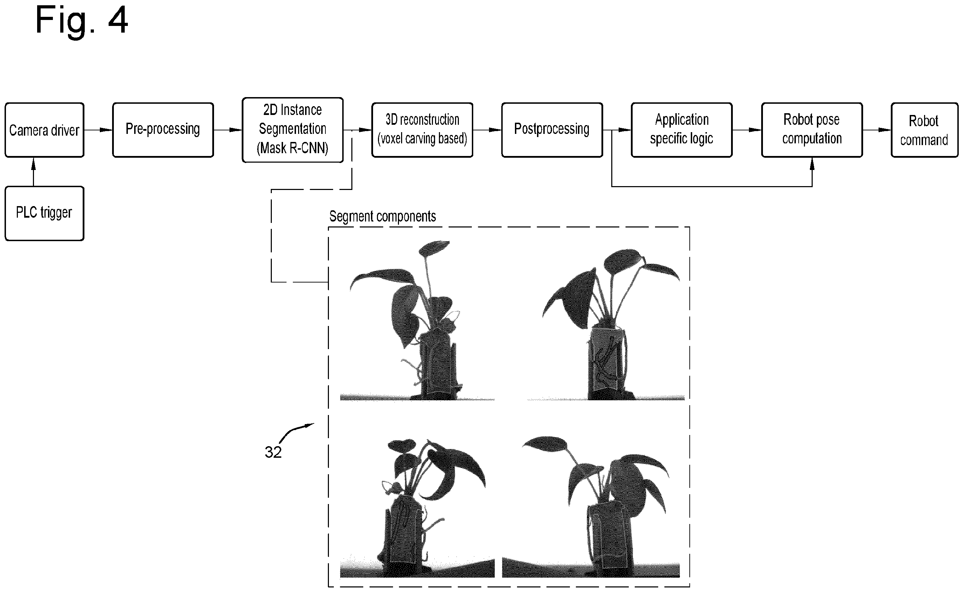

Fig. 4 illustrates a segment confidence mask step of example embodiments of a method according to the invention. Here, only four of the seven images (32) are shown. The 2D instance segmentation processes the foreground mask to generate per-class probabilities for each pixel of each image, each class corresponding to one of a plurality of segment components. In this example, the segment component is either root or soil. The root 2D Mask R-CNN generates a first probability map, wherein each foreground pixel is assigned a probability value according to its probability of belonging to a single segment component root or multiple segment components roots being part of the single segment component roots. Likewise, the soil 2D Mask R-CNN generates a second probability map, wherein each foreground pixel assigned a probability value according to its probability of belonging to soil. This results in seven (only four shown) confidence masks (323) for the roots segment class, each mask corresponding to an input image. Likewise, this results in seven (only four shown) confidence masks (324) for the soil segment class, each mask corresponding to an input image.

As will be understood herein, the 2D images may be segmented into other additional or alternative segment components, such as leaf, stem or any other component of interest in the image (e.g., a shoot of a plant).

Fig. 5 illustrates a 3D annotated point cloud step of example embodiments of a method according to the invention, for obtaining an annotated point cloud (34). The confidence masks (323, 324) of each of the seven images (32) are fed to a 3D reconstruction algorithm (213) together with the foreground masks (30). In the example of Fig. 4, the number of confidence masks (323, 324) is fourteen (i.e., two masks in each of the seven images 30). However, other multiples, such as one, two, three, four or more masks in each of the images (30) may be generated. As shown in Fig. 5, the 3D reconstruction is based on voxel carving for performing the 3D reconstruction, along with segmentation based on the confidence masks.

The segmenting (214), which essentially boils down to "painting" portions of the 2D images and/or the 3D reconstructed surface according to the appropriate segment class, may for instance relate to transforming the plurality of confidence masks into segment masks by setting the segment class of each pixel according to averaging, but also other ways of assigning segment classes may be used, such as assigning to the class with the highest probability.

As is shown in Fig. 5, the 3D point cloud is annotated (i.e., coloured) with features i.e., (voxels) according to the appropriate segments class, for e.g., segment component leaves (341), segment component stems (342) and segment component conveyor (345).

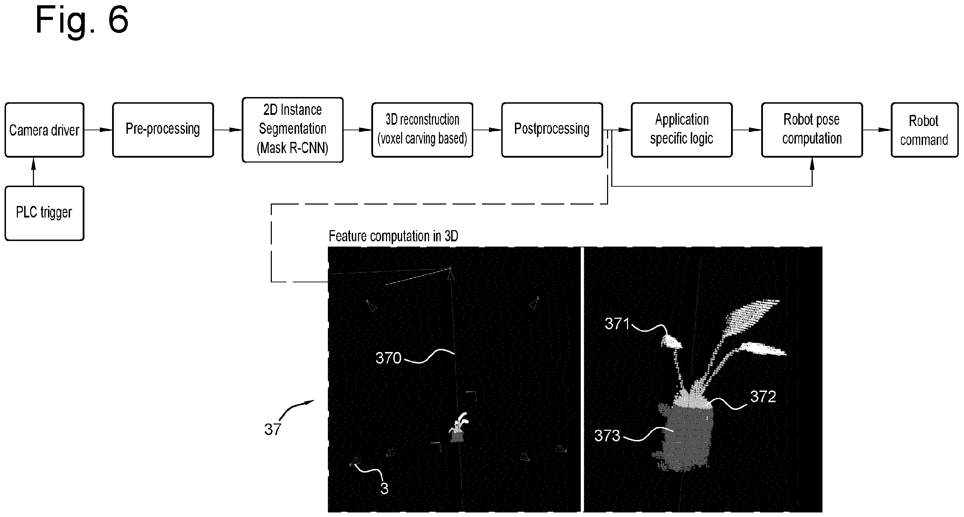

Fig. 6 illustrates a measurement step with respect to the 3D annotated point cloud of example embodiments of a method according to the invention. In this example, a step of post-processing (216) is included. In the post-processing, features of the considered object may be taken into account to improve the segmentation. For instance, this may include a continuity check for the segment component of interest, wherein gaps between adjacent portions of the segment component of interest or determined to either belong to the segment component of interest or not. This may furthermore relate to semantic checks, wherein the number of other segment components and their mutual positions and/or their positions with respect to the segment component of interest are determined and checked for validity and preferably corrected.

As shown in Fig. 6, the 3D point cloud is annotated with features according to segment classes of interest relating to the plant, for e.g., segment component leaves (371), segment component stems (372) and segment component other portion of the object (373).

In embodiments, the post-processing (216) may comprise any one or combination of the following:
Subtracting voxels corresponding to segment component(s) of non-interest from the 3D point cloud. In Fig. 6 this is shown by subtracting the voxels corresponding to the segment component conveyor (345).
Performing an interpolation, such as morphological reconstruction, flood-fill, region-fill or the like, to annotate the 3D point cloud over the complete volume of each of the segment components. In Fig. 6, this is shown as all the voxels corresponding to the respective segment component being coloured, in comparison to the 3D point cloud in Fig. 5, where the surrounding voxels comprised in the plurality of voxels corresponding to the respective segment component are coloured. Performing a measurement with respect to the plurality of the voxels of interest, as described in further detail below.

In embodiments, the measurement comprises or relates to computing or counting the plurality of voxels of interest corresponding to the segment component(s) of interest. Thus, the number of elements or instances in each segment component of interest can be computed or counted. The measurement may comprise determining any one or combination of: a number of elements, an area, a volume, a length, a height and an angle of a segment component and/or an element or instance thereof based on the counting of the plurality of the respective voxels. Said number of elements, area, volume, length, height and angle may be determined based on each other.

The number of a segment component and/or an element or instance thereof may be determined based on the number of computed or counted voxels. For example, considering the segment components of interest in Fig. 6 being a first segment component (segment component leaf 371) and a third segment component (segment component stem 372), the number of each of the segment components is three.

The volume of a segment component and/or an element or instance thereof may be determined based on the number of computed or counted voxels. The volume can be determined as the number of voxels in a segment component and/or each element or instance thereof.

The area of a segment component and/or an element or instance thereof may be determined based on the number of computed or counted voxels. The area can be determined as the number of voxels in a projection of a segment component and/or an element or instance thereof onto a plane. The area may be determined based on the volume. The area may be determined according to a surface approximation or reconstruction (e.g., Marching cubes algorithm) based on a 3D surface of the 3D reconstructed voxel representation.

The length of a segment component and/or an element or instance thereof may be determined based on the number of computed or counted voxels. The length can be determined as the number of voxels counted along a main direction of said a segment component and/or an element or instance thereof. For example, the main direction of a stem in Fig. 6 relates to the growth direction of said stem. The length may be determined based on the area.

The height of a segment component and/or an element or instance thereof may be determined with respect to a main direction comprised or relating to the reference volume. The main direction of the reference volume may be considered with respect to the locations of the at least two cameras (3). As can be seen in Fig. 6, the main direction (370) of the reference volume is determined to be a direction in which the camera above the plant is facing. Therefore, the height may be determined based on counting of the plurality of voxels corresponding to said segment component and/or element or instance thereof along onto the main direction. Said voxels may be projected onto the main direction, and the height may be determined based on the number of projected voxels, where overlapping voxels are counted as one voxel. In Fig. 6, a height of the plant or of one of the stems may be determined with respect to the main direction of the reference volume.

The angle of a segment component and/or an element or instance thereof may be determined with respect to the main direction. The angle may be determined based on counting of the plurality of voxels corresponding to said segment component and/or element or instance thereof along onto the main direction. For example, a distance(s) between the main direction and any one or combination of the plurality of said voxels along a perpendicular plane to the main direction may be measured or computed. Thus, the angle may be determined based on said distance(s). In Fig. 6, a growth angle of one of the stems may be determined with respect to the main direction of the reference volume.

In embodiments, an area at an interface (or interface area) between a plurality of first voxels corresponding to a segment component and/or an element or instance thereof and a plurality of second voxels corresponding to another segment component and/or an element or instance thereof may be determined. Said determining of the area at the interface may be interpolated with respect to a missing part (e.g. an opening or a hole) of the plurality of first voxels being the voxels of interest. This may be performed to "close" said opening when, for e.g., subtracting the plurality of second voxels from the 3D point cloud, the second voxels being voxel of non-interest. Such an interpolation may be related to the interpolation comprised in the post-processing (216). For example, consider the segment components of interest in Fig. 6 being the first segment component (segment component leaf 371 and stem 372) and the voxels corresponding to the segment component of non-interest being a second segment component (segment component other portion 373). The first segment component may comprise a third segment component (372), where the third voxels do not belong to the first voxels. Thus, an area at the interface between the plurality of the second and third voxels (i.e., between a stem and the other portion) can be determined as described above. Thus, said determining of the volume or area of a segment component and/or an element or instance thereof can be computed or counted based further on said interface area.

### Example 3: example embodiment with 2D semantic segmenting according to the invention

This example relates to a method that corresponds in many aspects and/or features to the method of Example 2. Therefore, only the differences will be described here for the sake of brevity.

In embodiments, the step of generating (15) the segmented voxel representation comprises a 2D semantic segmentation (14) of the at least two images (30) by means of at least one trained 2D CNN, preferably a U-net.

The 2D semantic segmentation processes the foreground mask to generate per-class probabilities for each pixel of each image, each class corresponding to one of a plurality of segment components. Each of the 2D U-nets processes the images (30) to generate per-class probabilities for each pixel of each image, each class corresponding to one of a plurality of segment classes. In the example of Fig. 4, the segment class corresponds to roots and soil of the plant. The U-net generates a first probability map, wherein each pixel of the object (e.g. foreground pixel) is assigned a probability value according to its probability of belonging to a roots class or soil class. This results in confidence masks for the roots and soil segment classes, each mask corresponding to an input image.

The segment classes may be processed for determining elements within or of said classes (e.g., a first root, a second root, a first leaf, a second leaf, etc.). The result may be similar to determining instances using instance segmentation.

In embodiments, clustering may be performed after 2D segmentation on the at least two segmented images (32) and/or after 3D reconstruction (e.g., post-processing 16; 216) on the segmented voxel representation (34). Several clustering approaches exist, such as density-based, distribution-based, centroid-based and hierarchical-based. Examples of these approaches are K-means, density-based spatial clustering (DBSCAN), Gaussian Mixture Model, Balance Iterative Reducing and Clustering using Hierarchies (BIRCH), Affinity Propagation, Mean-Shift, Ordering Points to Identify the Clustering Structure (OPTICS), Divisive Hierarchical clustering, Agglomerative Hierarchy, Spectral Clustering, etc.

### Example 4: example embodiment with 2D semantic and instance segmenting according to the invention

This example is essentially a combination of Example 2 and Example 3. This may be seen as 2D panoptic segmentation, where it semantically distinguishes different segment classes as well as identifies separate elements or instances of each kind of segment class in the input image. It enables having a global view of image segmentation (class-wise as well as instance-wise).

2D panoptic segmentation assigns two labels to each of the pixels of an image: a semantic label and an instance identification (ID). The pixels having the same label are considered belonging to the same semantic class and instance IDs differentiate its instances. Unlike instance segmentation, each pixel in panoptic segmentation has a unique label corresponding to an instance which means there are no overlapping instances.

Examples of 2D panoptic segmentation include Fast Panoptic Segmentation Network (FPSNet) as described in (Daan de Geus et al., (2019). Fast Panoptic Segmentation Network, http://arxiv.org/pdf/1910.03892v1) and/or a unified neural network for panoptic segmentation as described in (Yao, L., & Chyau, A. (2019). A Unified Neural Network for Panoptic Segmentation. Computer Graphics Forum, 38(7), 461-468. doi:10.1111/cgf.13852).

### Example 5: example embodiment with 3D instance segmenting according to the invention

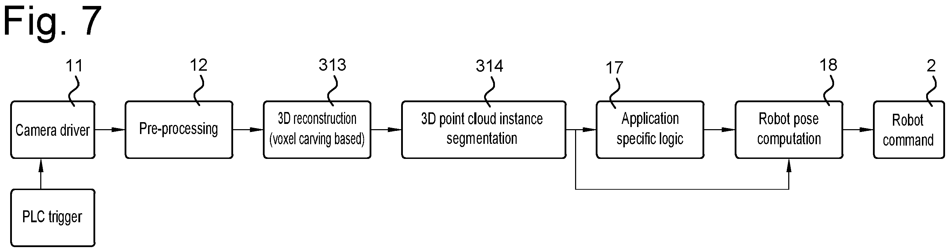

Fig. 7 illustrates example embodiments of a method according to the invention with 3D NN. The method is essentially the same as that of Example 2 with respect to the image acquisition (11), pre-processing (12), application specific logic (17) and the robot pose computation (18). However, instead of using Mask R-CNN, the output of the pre-processing step is fed directly to the 3D reconstruction step (313), which generates an unsegmented 3D voxel representation. This voxel representation is then fed into a 3D point cloud semantic segmentation step (314), which relates to one or more 3D trained NNs, for instance a 3D leaf NN, a 3D stem NN, 3D root NN and/or a 3D soil NN, wherein the NNs preferably comprise 3D-BoNet and/or ASIS.

While Fig. 7 does not display post-processing, the step of 3D point cloud instance segmentation (314) may include post-processing along the lines of Example 2, including e.g. subtracting voxels of non-interest, performing interpolation, performing a measurement with respect to the voxels of interest, a continuity and/or semantic check, etc. The result thereof may again be fed to the further steps, similar to Example 2.

In embodiments, the pre-processing (12) comprises projecting the original image and/orthe black and white image/mask to a 3D surface, for example, performing a 3D reconstruction (e.g., voxel carving) of the 3D surface of the object (1) based on at least the two or more images. The voxel representation may allow the generation of one or more foreground and/or background masks through projection. For instance, the voxel representation may be projected onto a 2D surface, for example, generating, with respect to the original image and/or black and white image/mask, at least two images having foreground and background masks, preferably only foreground masks. The 2D surface may be further projected onto a 3D surface, for example, further performing a 3D reconstruction (e.g., voxel carving) of the 3D surface of the object (1) based on at least the two or more images having foreground and/or background masks. Said 3D surface may then be fed to the next step of 3D segmenting (314) said voxel representation (i.e., having foreground masks or additionally background masks) for determining one or more segment components corresponding to, e.g., protruding portions of the object (1) in the voxel representation. Thus, the foreground and background masks can be more precisely segmented. Furthermore, noise can be more effectively suppressed/handled in the at voxel representation.

### Example 6: example embodiment with 3D semantic segmenting according to the invention

This example relates to a method that corresponds in many aspects and/or features to the method of Example 3 with respect to the image acquisition (11), pre-processing (12), application specific logic (17) and the robot pose computation (18).

However, instead of using 2D u-nets, the output of the thresholding step is fed directly to the 3D reconstruction step (313), which generates an unsegmented 3D voxel representation. This voxel representation is then fed into a 3D point cloud semantic segmentation step (14), which relates to one or more 3D trained NNs, for instance a 3D main stem NN and a 3D branch point NN, wherein the NNs preferably comprise PointNet++ or DGCNN.

Similar to the method of Example 4, the step of 3D point cloud semantic segmentation (314) may include post-processing along the lines of Example 2 and Example 3.

### Example 7: example embodiment with 3D semantic and instance segmenting according to the invention

This example is essentially a combination of Example 5 and Example 6. Furthermore, this can be seen as 3D panoptic segmentation similar to Example 4, where labels are assigned voxels of a 3D point cloud. The voxels having the same label are considered belonging to the same semantic class and instance IDs differentiate its instances.

Examples of 3D semantic and instance segmentation include 3D-SIS and CF-SIS.

### Example 8: example embodiment with 2D and 3D instance segmenting according to the invention

This example method is essentially a combination of Example 2 and Example 5, wherein the input of the 3D reconstruction step (313) not only includes images after pre-processing (12), but also confidence masks output by one or more Mask R-CNNs. The voxel representation generated accordingly may already comprise a preliminary segmentation, which may be further improved by applying one or more 3D trained NNs, for instance 3D-BoNet and/or ASIS. The combined use of 2D NNs and 3D NNs for instance segmentation may lead to enhanced accuracy and/or robustness.

### Example 9: example embodiment with 2D and 3D semantic segmenting according to the invention

This example method is essentially a combination of Example 3 and Example 6, wherein the input of the 3D reconstruction step (313) not only includes images after pre-processing (12), but also confidence masks output by one or more U-nets. The voxel representation generated accordingly may already comprise a preliminary segmentation, which may be further improved by applying one or more 3D trained NNs, for instance a 3D main stem PointNet++ or DGCNN and a 3D branch point PointNet++ or DGCNN. The combined use of 2D NNs and 3D NNs for semantic segmentation may lead to enhanced accuracy and/or robustness.

### Example 10: example GUI with 2D annotation according to the invention

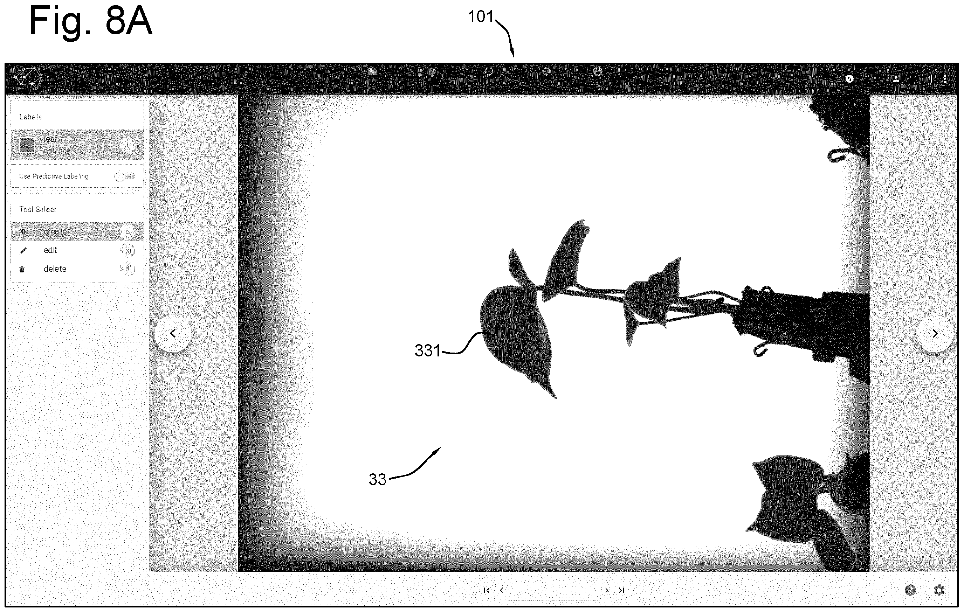

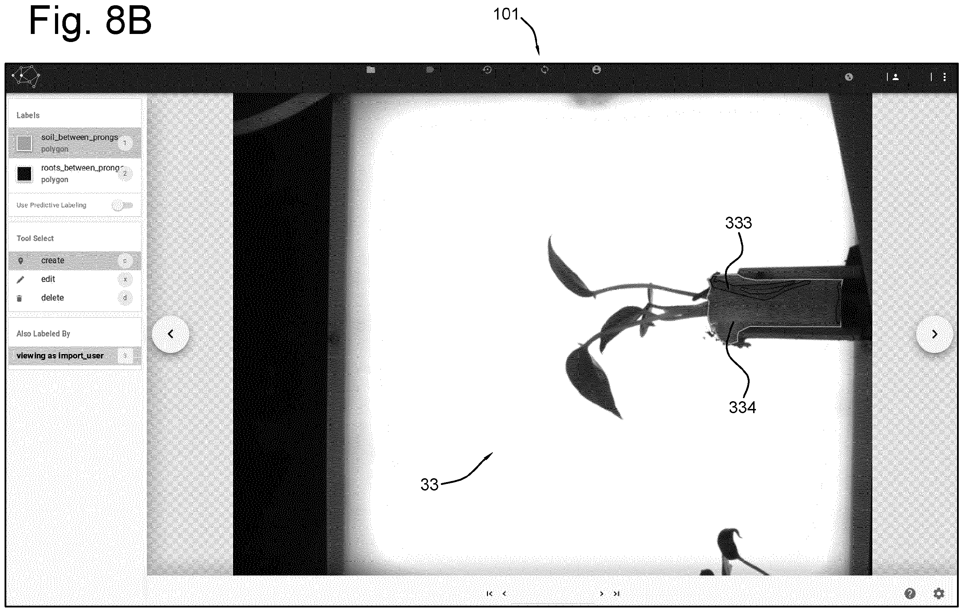

Figs. 8a and 8B illustrate example embodiments of a GUI with 2D annotation. The GUI (101) may be used for training of any NN, preferably the NNs of Example 2, Example 3, Example 5 and Example 6. The GUI (101) operates on a training set relating to a plurality of training objects (33), in this example a training set with images of several hundred plants, with seven images for each plant taken by seven cameras from seven different angles. Each of the training objects (33) comprises a 3D surface similar to the 3D surface of the object for which the NN is trained, i.e. another plant.

However it should be noted that the NN, when trained for a plant, may also be used for other plants of similar structure, even if the training set did not comprise any training objects other than said plants.

The GUI (101) comprises at least one image view and allows to receive manual annotations (331, 333, 334) with respect to a plurality of segment classes from a user of said GUI (101) for each of the training objects. Particularly, the segment classes relate to leaf, soil/dirt and roots, each depicted in such a way that they are visually distinguishable, e.g., by means of different colors and shapes. In this example, for instance, different colors are used, and the soil or dirt (334) and the roots (333) are marked different respective colors.

The GUI (101) allows to receive manual annotations of the entire test set. In a next step, the manual annotations (331, 333, 334) are used to train at least one NN. In the case of the NNs of Example 2, Example 3, Example 5 and Example 6, this corresponds to the trained leaf NN, root NN and soil NN.

### Example 11: example GUI with 2D and 3D annotation according to the invention

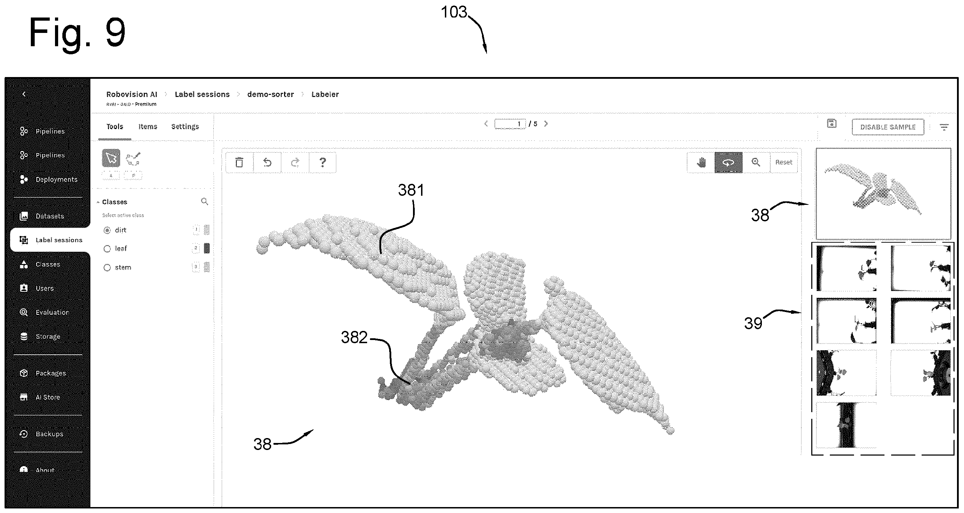

Fig. 9 illustrates example embodiments of a GUI (103) with both 2D and 3D annotation. The GUI (103) is similar to the GUI (101) of Example 10 in operation and aim, with the further addition of a 3D reconstruction view (38). The 3D reconstruction view (38) is displayed along with at least one image view (39). The GUI (103) lets the receipt of a manual annotation (381, 382) from the user via one of said 3D reconstruction view (38) and one of said at least one image view (39) cause the other one of said 3D reconstruction view (38) and one of said at least one image view (39) to be updated according to said manual annotation (381, 382). This relates to by automatically projecting the manual annotation of an image to a 3D voxel representation, or vice versa. This is advantageous since it leads to more user-friendly and/or more accurate and/or faster manual annotation by the user.

The GUI (103) may be used for training of any NN, preferably the NNs of Example 6 and Example 7. The GUI (103) may operate on a training set relating to a plurality of training objects (38), in this example a training set with images of several hundred plants, with seven images for each plant taken by seven cameras from seven different angles.

Preferably, the GUI (103) thereby provides automated annotation of the at least two images (30) acquired by the plurality of cameras (3), wherein the manual annotation of at least one first image belonging to said at least two images (30) is used to automatically annotate at least one second image belonging to said at least two images (30) and different from said at least one first image. Herein, the at least one second image may comprise images which have not been annotated yet, but also images which have been annotated previously. This is enabled by automatically projecting the manual annotation of the at least one first image to the 3D voxel representation and back to the second image. This has the advantage of reducing the manual work involved in annotating the 2D images, both in case of 2D segmentation and 3D segmentation. In preferred embodiments, this relates to accurate camera calibration, since the accuracy of said automatic annotation of the at least two images (30) is higher as more information regarding the position of the involved cameras is available.

### Example 12: example embodiment with physical sorting according to the invention

This example method corresponds in many aspects and/or features to the methods of Examples 1-9, particularly this example method relates to the physical handling of the object (1), preferably to the physical sorting of the object (1) by the robot element (4) according to the invention.

The physical sorting is performed according to a physical destination location corresponding to a class relating to the measurement with respect to a plurality of voxels of interest. Thus, a plant is classified based on the measurement, and then may be physically relocated according to said classification. Examples of the measurement include any one or combination of a measurement relating to a plant, a leaf or leaves, a stem or stems, a roots or roots, etc.

Examples of plant measurements are: plant height, plant volume, plant area, plant length, plant health (e.g., problems relating to diseases, plant deformation, air humidity, dryness, root rot, ...), etc.

Examples of leaf measurements are: leaf area, leaf volume, leaf thickness, number of leaves, leaf height, leaf length, bad leaf detection (e.g., problems relating to diseases, leaf deformation, air humidity, dryness, root rot, ...), etc.

Examples of stem measurements are: stem area, stem volume, stem thickness, number of stems, stem height, stem length, stem angle, stem percentage (e.g., with respect to the plant or to any one or combination of the leaves, roots and soil), stem health (e.g., problems relating to diseases, stem deformation, air humidity, dryness, root rot, ...), etc.

Examples of root measurements are: root area, root volume, root thickness, number of roots, root height, root length, root ratio (e.g., with respect to the plant or to any one or combination of the leaves, stems and soil), root health (e.g., problems relating to diseases, root deformation, soil humidity, root rot, ...), etc.

In embodiments, the robot element (4) may be actuated to physically sort the object (1). For example, the robot element (4) may comprise one or more distal ends (such as finger, clamping means.

In other example embodiments, the object to be sorted is an insect. In such example embodiments, NNs are trained with a corresponding training set of insects, and sorting is performed based on one or more measurements performed on the insect, such as length and/or wingspan and/or shape and/or volume and/or color and/or texture.

In other example embodiments, the object to be sorted is a fish, e.g. a salmon. In such example embodiments, NNs are trained with a corresponding training set of fish, and sorting is performed based on one or more measurements performed on the fish, such as length and/or shape and/or volume and/or color and/or texture.

### Example 13: example embodiment with physical sampling according to the invention

This example method corresponds in many aspects and/or features to the methods of Examples 1-9, particularly this example method relates to the physical handling of the object (1), preferably to the physical separating a sample from the object (1) according to the invention.

The physical separating of a sample from the object (1) will be referred to as 'sampling' the object (1). Preferably, the sample is separated from the object (1) at the handling coordinate. Furthermore, the robot command (2) may comprise a 3D approaching angle for reaching the handling coordinate on said object (1). Particularly, the robot command (2) relates to a robot pose, that comprises a starting and/or ending position, i.e. a set of three coordinates, e.g., x, y, z, within the reference volume, and, if one of the starting and ending positions is not included, an approaching angle, i.e. a set of three angles, e.g., alpha, beta and gamma, indicating the angle from which the robot element (4) should approach the object (1). The robot pose is thereby calculated such that the plant or parts thereof are not damaged due to the movement of the robot element (4).

Furthermore, the 3D approaching angle for reaching the handling coordinate on said object (1) relates to a 3D sampling angle for separating the sample at the handling coordinate. The sampling angle (i.e. a set of three angles, e.g., alpha, beta and gamma) indicates the angle from which the robot element (4) should sample the object (1) at the handling coordinate. Preferably, the 3D sampling angle is comprised in the robot command (2). The receiving portion of the object (1) may be, for e.g., any one of a leaf, a stem and a root of a plant. Said receiving portion may be determined based on the measurements, as described, for e.g., in Example 2 and Example 12. Furthermore, the receiving portion is determined from among a plurality of portions of the object (1). For example, the receiving portion may be a leaf determined from among one or more leaves, one or more stems, and/or one or more roots. Preferably, the receiving portion may be a part of, for e.g., the determined leaf.

The receiving portion may comprise a main plane, which may an estimated or an approximated plane of the receiving portion, preferably the handling coordinate being in the main plane of the receiving portion. Furthermore, the main plane my comprise a main direction of the receiving portion, for e.g., a growth direction of a leaf, stem or root.

In embodiments, the sampling comprises surrounding the receiving portion (e.g., the determined leaf) by two distal ends of the robot element (4) at the 3D sampling angle. The surrounding of the receiving portion can be understood as, for e.g., the two distal ends being on opposite sides of the leaf. In embodiments, the robot element (4) may comprise more than two distal ends, for e.g., to surround the receiving portion from different sides. It is desired that sampling is performed essentially parallel to the main plane of the receiving portion at the handling coordinate. Therefore, the 3D sampling angle preferably relates to the two distal ends of the robot element (4) being essentially parallel to the main plane of the receiving portion.

The distal ends of the robot element (4) may each be at least at 1 mm, at least 2 mm, at least 3 mm, at least 4mm, etc. distance from the receiving portion, the main plane or the handling coordinate, preferably along an axis perpendicular to the main plane of the receiving portion. Preferably, the distal ends are at 3-4 mm from the receiving portion, the main plane or the handling coordinate.

In embodiments, the handling coordinate may be a predetermined coordinate based on the measurement. The predetermined coordinate may be 50%, 60%, 70%, 80%, etc. of a measured length (e.g., leaf length) with respect to an end of the receiving portion (e.g., a tip of the leaf or an interface between the leaf and the stem), preferably at 50% of the measured length. The predetermined coordinates may be additionally or alternatively determined based other measurements, such as the measured area, thickness, etc. For example, the coordinate is determined where the leaf thickness is highest for the leaf being the receiving portion.

In embodiments, a further sample may be separated from the object (1) at a further handling coordinate. The further handling coordinate may be a further predetermined coordinate based on the measurement and/or on the first handling coordinate relating to the first sample. The further predetermined coordinate may be 10%, 20%, 30%, 40%, etc. of a measured length with respect to the end of the receiving portion, preferably at 30% of the measured length. The further predetermined coordinates may be additionally or alternatively determined based relative to the first handling coordinate, for example, 20%, 30%, 40%, 50%, 60%, 70%, 80% etc. of a length between the end of the receiving portion and the first handling coordinate, preferably at 50% of said length. It will be understood that said length is determined based on the first handling coordinate, e.g., half of the measured leaf length.

In alternative embodiments, the further handling coordinate may relate to a further receiving portion. This can be desired when no proper pose of the robot element (4) can be achieved or determined (e.g., not enough free surface, a collision by the robot element 4, etc.), or when the robot command (2) returns an error.

## Claims

1. A method for generating a technical instruction for handling a three-dimensional, 3D, physical object (1) present within a reference volume, the object (1) comprising a 3D surface, the method comprising:
- obtaining (11) at least two images (30) of the object (1) from a plurality of cameras (3) positioned at different respective angles with respect to the object (1);
- generating (15), with respect to the 3D surface of the object (1), a voxel representation segmented based on the at least two images (30), said segmenting (14) comprising identifying a first segment component corresponding to a plurality of first voxels (371, 372) and a second segment component corresponding to a plurality of second voxels (373) different from the plurality of first voxels (371, 372);
- performing a measurement with respect to the plurality of first voxels (371, 372); and
- computing (18) the technical instruction, said technical instruction preferably comprising a robot command (2), for the handling of the object (1) based on the segmented voxel representation and the measurement,
wherein said segmenting (14) relates to at least one trained NN being trained with respect to the 3D surface.

2. The method according to claim 1, wherein the technical instruction comprises a robot command (2), wherein the robot command (2) is executable by means of a device comprising a robot element (4) configured for handling the object (1).

3. The method according to any of claim 1 and claim 2, further comprising:
- pre-processing (12) of the at least two images (30) based on a mask projection for distinguishing foreground from background, said mask projection being based at least partially on a mask-related 3D reconstruction of the 3D surface of the object (1), said mask-related 3D reconstruction preferably being said voxel representation.

4. The method according to any of claims 1-3, wherein said segmenting (14) further comprises identifying a third segment component corresponding to a plurality of third voxels (372) comprised in the plurality of first voxels (371, 372), wherein at least one of the first voxels (371, 372) does not belong to the third voxels (372),
wherein the measurement is performed further with respect to the plurality of third voxels (372),
wherein preferably the measurement is performed further with respect to the plurality of second voxels (373).

5. The method according to any of claims 1-4, wherein the 3D surface of the object (1) is a plant comprising, one or more leaves, corresponding to the first segment component and preferably one or more stems corresponding to the third segment component,
wherein preferably the plant further comprises soil and/or one or more roots, corresponding to the second segment component.

6. The method according to any of claims 1-5, wherein the generating (15) comprises:
- performing (13) a 3D reconstruction of the 3D surface of the object (1) based on the at least two images (30) for obtaining a voxel representation, and
- obtaining said segmented voxel representation by projecting at least the first segment component with respect to said voxel representation,
wherein the at least one trained NN comprises an instance segmentation NN, preferably being a 2D and/or 3D region-based convolutional neural network, R-CNN, more preferably being a Mask R-CNN for segmenting the at least two images (30) and/or a 3D-BoNet for segmenting the voxel representation.

7. The method according to any of claims 1-6, wherein the generating (15) comprises:
- performing (13) a 3D reconstruction of the 3D surface of the object (1) based on the at least two images (30) for obtaining a voxel representation, and
- obtaining said segmented voxel representation by projecting at least the first segment component with respect to said voxel representation,
wherein the at least one trained NN comprises a semantic segmentation NN, preferably being a 2D and/or 3D convolutional neural network, CNN, more preferably being a 2D U-net for segmenting the at least two images (30) and/or a PointNet++ for segmenting the voxel representation,
wherein preferably the obtaining of said segmented voxel representation comprises performing clustering with respect to said projected at least first segment component.

8. The method according to any of claims 1-7, wherein the measurement relates to counting with respect to the segmented voxel representation,
wherein the segmented voxel representation is obtained via semantic segmentation for counting clusters of voxels and/or instance segmentation for counting instances.

9. The method according to any of claims 1-8, wherein the measurement comprises determining any one or combination of: a number of elements, an area and a volume of said segment component based on counting with respect to the segmented voxel representation,
wherein preferably the measurement comprises determining any one or combination of: a height and an angle of said segment component with respect to a main direction comprised in the reference volume based on counting of a plurality of voxels associated with said segment component along the main direction,
wherein more preferably an area at an interface between the plurality of first and second voxels is interpolated with respect to an opening of the plurality of first voxels for performing said measurement.

10. The method according to any of claims 1-9, wherein the handling comprises physically sorting the object (1) according to respective physical destination locations corresponding to respective classes relating to the measurement with respect to the segmented voxel representation.

11. The method according to any of claims 1-10, wherein the handling comprises physically separating a sample from the object (1) at a handling coordinate based on said measurement,
wherein preferably the robot command (2) comprises a 3D approaching angle for reaching the handling coordinate on said object (1).

12. The method according to claim 11, wherein the 3D approaching angle for reaching the handling coordinate on said object (1) relates to a 3D sampling angle for separating the sample at the handling coordinate,
wherein preferably the 3D sampling angle is comprised in the robot command (2).

13. The method according to any of claim 11 and claim 12, further comprising:
- actuating the robot element (4) based on the robot command (2),
wherein said actuating comprises:
- approaching, by the robot element (4), the 3D surface at the 3D approaching angle; and
- separating, by the robot element (4), the sample from the object (1) at the handling coordinate,
wherein the step of separating comprises surrounding, by two distal ends of the robot element (4), a receiving portion of the object (1) at the 3D sampling angle,
wherein the 3D sampling angle relates to an orientation of the two distal ends of the robot element (4) with respect to a main plane of the receiving portion.

14. A device for handling a three-dimensional, 3D, physical object (1) present within a reference volume, the object (1) comprising a 3D surface, the device (10) comprising a robot element (4), a processor (5) and memory (6) comprising instructions which, when executed by the processor (5), cause the device (10) to execute a method according to any of claims 1-13.

15. A system for handling a three-dimensional, 3D, physical object (1) present within a reference volume, the object (1) comprising a 3D surface, the system comprising:
- a device (10), preferably the device (10) according to claim 11;
- a plurality of cameras (3) positioned at different respective angles with respect to the object (1) and connected to the device (10); and
- preferably, a robot element (4) comprising actuation means and connected to the device (10),
wherein the device (10) is configured for:
- obtaining (11) at least two images (30) of the object (1) from a plurality of cameras (3) positioned at different respective angles with respect to the object (1);
- generating (15), with respect to the 3D surface of the object (1), a voxel representation segmented based on the at least two images (30), said segmenting (14) comprising identifying a first segment component corresponding to a plurality of first voxels (371, 372) and a second segment component corresponding to a plurality of second voxels (373) different from the plurality of first voxels (371, 372);
- performing a measurement with respect to the plurality of first voxels (371, 372);
- computing (18) a technical instruction, said technical instruction preferably comprising a robot command (2), for the handling of the object (1) based on the segmented voxel representation and the measurement; and
- preferably, sending the robot command (2) to the robot element (4) for letting the robot element (3) handle the object (1),
wherein the plurality of cameras (3) is configured for:
- acquiring at least two images (30) of the object (1); and
- sending the at least two images (30) to the device (10),
wherein preferably the robot element (4) is configured for:
- receiving the robot command (2) from the device (10); and
- handling the object (1) using the actuation means,
wherein said segmenting relates to at least one trained NN being trained with respect to the 3D surface.

16. A non-transient computer readable medium containing a computer executable software which when executed on a device, preferably the device according to claim 14, performs the method of any one of claims 1-13.
